# EUROPEAN PATENT APPLICATION

(11) **EP 2 017 141 A2**
(43) Date of publication of application: **21.01.2009**
(21) Application number: 08156136.7
(22) Date of filing: 14.05.2008
(51) Int. Cl.: B60R 21/239, B60R 21/233

(54) **Airbag and airbag system**

(30) Priority: 17.07.2007 JP 2007185852
(71) Applicant: Takata Corporation, Tokyo 106-8510 (JP)
(72) Inventor: Abe, Kazuhiro, Tokyo Tokyo 106-8510 (JP); Carmen, Arroyo, Tokyo Tokyo 106-8510 (JP)
(74) Representative: Vossius & Partner

(57) **Abstract**

An airbag that is hardly influenced by heat from an inflator when a strap for restricting a shape of inflation of the airbag ruptures and an airbag system having this airbag are provided. A strap 20 is provided within the airbag 10 to restrict the shape of inflation of the airbag 10. The strap 20 is what connects right and left sides of the airbag 10. The strap 20 is made of a fabric woven by warps and woofs and is arranged so that a fine line direction of the fabric runs in a direction oblique to a longitudinal direction, i.e., a tensile direction, of the strap 20. When predetermined or more tensile force is applied to the strap 20, the texture of the fabric becomes loose and the strap ruptures such that the warps and woofs of the fabric composing the strap 20 are pulled out of the texture of the fabric (Fig. 2).

## Description

The present invention relates to an airbag provided with a strap for restricting a shape of inflation of the airbag and arranged so that the strap ruptures due to tensile force applied to the strap when internal pressure of the airbag exceeds predetermined pressure. The invention also relates to an airbag system having such airbag.

There has been known an airbag provided with a strap for restricting a shape of inflation of the airbag and arranged so that the strap ruptures due to tensile force applied to the strap when internal pressure of the airbag exceeds predetermined pressure.

In Fig. 4 of JP-A-48-87533 (Patent Document 1), there is provided a pair of straps (referred to as a 'constraining member' in said document) connecting right and left sides of the airbag. Each strap is composed of a first half strap (there is no naming in the Gazette of that Number) whose one end is connected to the left side of the airbag and a second half strap (there is no naming in the Gazette of that Number) whose one end is connected to the right side of the airbag and the other ends of the half straps are seamed by a seaming yawns having low strength by abutting the other ends of those half straps.

When this airbag inflates, each strap restricts the right and left sides of the airbag from separating until when the inner pressure of the airbag exceeds the predetermined pressure. Therefore, it is possible to inflate the airbag quickly even by an inflator having a relatively low output

When an occupant abuts against the inflated airbag and the inner pressure of the airbag exceeds the predetermined pressure, the seaming yawn seaming the half straps is cut by tensile force applied to the strap and the half straps separate from each other. Thereby, a distance between the right and left sides of the airbag increases and the airbag softly receives the occupant.

However, because rupture strength of this yawn largely depends on temperature in the airbag arranged so that the strap ruptures when the yawn is cut as disclosed in Japanese Patent Specification Laid-open No. Sho. 48-87533 Gazette as described above, it is apt to be influenced by heat of injection gas from the inflator and timing when the yawn is cut, i.e., timing when the strap ruptures, is apt to vary depending on a shape, disposition and others of the inflator.

That is, when a gas injecting port of the inflator orients in a direction of the strap or when a distance from the gas injecting port to the strap is short for example, there is a possibility that the rupture strength of the yawn drops and the yawn is cut (i.e., the strap ruptures) before the tensile strength exceeding the predetermined pressure is applied to the strap because the yawn is heated up by the injection gas from the inflator.

Still more, when a plurality of straps is provided within the airbag, there is a possibility that timing of rupture of the respective straps vary when the gas injecting port of the inflator orients in a direction of part of the strap and does not orient in a direction of other strap or when the distance from the gas injecting port of the inflator differs per each strap.

Accordingly, it is an object of the invention to provide an airbag that is hardly influenced by heat from the inflator when the airbag inflation shape restricting strap ruptures and an airbag system having this airbag.

An airbag of Claim 1 is provided with an airbag inflation shape restricting strap that ruptures due to tensile force applied to the strap when internal pressure of the airbag exceeds a predetermined pressure, wherein the strap is made of a fabric and a fine line direction of the fabric runs in a direction oblique to a tensile direction of the strap.

The airbag of Claim 2 is characterized in that in Claim 1, the fine line direction runs obliquely by 30 to 60° with respect to the tensile direction.

The airbag of Claim 3 is characterized in that in Claim 2, the fine line direction runs obliquely by 40 to 50° with respect to the tensile direction.

The airbag of Claim 4 is characterized in that in anyone of Claims 1 through 3, a plurality of straps including at least first and second straps is provided and the first and second straps are what the first strap is stretched first when the airbag inflates and the second strap is stretched after when the first strap ruptures.

The airbag of Claim 5 is characterized in that in anyone of Claims 1 through 4, the strap is partially narrowed.

The airbag of Claim 6 is characterized in that in anyone of Claims 1 through 5, the airbag has a vent hole and restricting means for restricting gas from discharging out of the vent hole, wherein the restricting means comprises a lid for covering the vent hole and a connecting member for connecting the lid with the strap and the airbag is arranged such that the vent hole is closed or narrowed when the airbag inflates because the strap and the connecting member prevent the lid from separating from the vent hole until when internal pressure of the airbag becomes predetermined pressure and such that the vent hole is opened or its opening is increased when the internal pressure of the airbag exceeds the predetermined pressure and the strap ruptures because the lid separates from the vent hole due to gas pressure within the airbag.

An airbag system of Claim 7 comprises an airbag according to anyone of Claims 1 through 6 and an inflator for inflating the airbag.

In the airbag and the airbag system of the invention, the airbag inflation shape restricting strap is made of a fabric and a fine line direction of the fabric runs in a direction oblique to a tensile direction of the strap. When such strap is cut of the fabric, warps and woofs of the fabric are disconnected along sides on the both ends in the direction crossing with the tensile direction of the strap. The warps and woofs of the fabric composing the strap are not continuous at least partially from one end to another end of the strap in the tensile direction and are disconnected on a way of the strap in the tensile direction.

Therefore, when the predetermined or more tensile force is applied to the strap, the texture of the fabric is at least partially become loose and the strap ruptures as if the warps and woofs disconnected on the way of the strap in the tensile direction are pulled out of the texture of the fabric.

It is noted that in a case when the fine line direction of the fabric composing the strap runs almost in the same direction with the tensile direction of the strap, one of the warps and woofs of the fabric is continuous from one end to another end of the strap before the strap ruptures. Therefore, the yarn continuous from one end to the other end of the strap needs to be cut for the strap to rupture. However, when the strap is arranged so that it ruptures by cutting the yarn as described above, timing when the yarn is cut, i.e., timing when the strap ruptures, is apt to vary by a shape and disposition of the inflator because rupture strength of the yarn depends on temperature as described above and is apt to be influenced by heat of injection gas from the inflator.

In contrary to that, the warps and woofs of the fabric composing the strap are discontinuous on the way of the strap in the tensile direction at least partially from the beginning in the airbag of the invention, the warps and woofs are pulled out of the texture of the fabric without being cut when predetermined or more tensile force is applied to the strap. Thereby, the texture of the fabric become loose at least partially and the strap ruptures. Therefore, this strap is hardly influenced by the heat of the injection gas from the inflator when it ruptures.

As a result, the timing of rupture of the strap hardly varies due to the shape and disposition of the inflator in the airbag of the invention. Due to that, the airbag system of the invention has a high degree of freedom in selection of the inflator and in disposition of the inflator.

Preferably, the fine line direction of the fabric runs obliquely from 30 to 60° or more specifically from 40 to 50° with respect to the tensile direction of the strap as disclosed in Claims 2 and 3.

According to an aspect of Claim 4, the airbag inflates until when the first strap is stretched when it inflates. Then, the first strap ruptures when internal pressure of the airbag exceeds the predetermined pressure and the airbag inflates further until when the second strap is stretched. When the internal pressure of the airbag exceeds the predetermined pressure again, the second strap ruptures and the airbag further inflates. It becomes possible to increase the internal pressure of the airbag quickly after when the airbag starts to inflate and to prevent the internal pressure of the airbag from excessively dropping by the rupture of the strap to keep the internal pressure of the airbag high by inflating the airbag so that it becomes large stepwise.

The stress concentrates to the narrow width portion when the tensile force is applied to the strap, so that the strap may smoothly rupture by narrowing the strap partially as disclosed in Claim 5.

According to an aspect of Claim 6, the strap restricts the shape of inflation of the airbag when the airbag inflates until when the internal pressure of the airbag exceeds the predetermined pressure and stretches the connecting member by pulling it to the inside of the airbag. Then the connecting member restricts the lid 60 from separating from the vent hole, so that the vent hole is closed or it's opening is decreased. It thus restricts the gas from discharging out of the vent hole, so that the inflation of the airbag is quickened.

When the internal pressure of the airbag exceeds the predetermined pressure after that, the strap ruptures. Thereby, the restriction of the shape of inflation of the airbag is released and the airbag becomes large. It suppresses the internal pressure of the airbag from increasing, so that the airbag receives the occupant softly.

The force of pulling the connecting member to the inside of the airbag is also released by the rupture of the strap. Therefore, the stretch of the lid is also released, the lid separates from the vent hole by the gas pressure within the airbag and the vent hole is opened or its opening is increased. Thereby, the gas discharges out of the airbag through the vent hole, absorbing an impact applied to the occupant.

Embodiments of the present invention will be explained below with reference to the drawings:
Fig. 1 is a section view when a shape of inflation of an airbag of the airbag and airbag system of an embodiment is restricted;
Fig. 2(a) is a section view taken along a line II-II in Fig. 1 and Fig. 2(b) is an enlarged view of a part B (around a strap) in Fig. 1(a);
Fig. 3 is a section view after when the restriction of shape of inflation of the airbag of the airbag and the airbag system in Fig. 1 has been released;
Fig. 4(a) is a section view taken along a line IV-IV in Fig. 3 and Fig. 4(b) is an enlarged view of a part B (around a strap) in Fig. 4(a);
Fig. 5 is an exploded plan view of an airbag of an embodiment;
Fig. 6 is a section view when the shape of inflation of the airbag of the airbag and the airbag system in Fig. 5 is restricted;
Fig. 7 is a section view showing a state when a first strap of the airbag in Fig. 5 has ruptured;
Fig. 8 is a section view showing a state when a second strap of the airbag in Fig. 5 has ruptured;
Fig. 9 is a plan view showing one exemplary disposition of the strap;
Fig. 10 is a plan view showing another one exemplary disposition of the strap;
Fig. 11 is a section view when the shape of inflation of the airbag of the airbag and the airbag system of an embodiment is restricted;
Fig. 12 is a plan view around a vent hole of the airbag in Fig. 11;
Fig. 13 is a section view after when the restriction of shape of inflation of the airbag of the airbag and the airbag system in Fig. 11 has been released;
Fig. 14 is a plan view when the shape of inflation of the airbag of the airbag of the embodiment is restricted;
Fig. 15 is a section view when the restriction of shape of inflation of the airbag in Fig. 14 is released;
Fig. 16 is a plan view when the shape of inflation of the airbag of the embodiment is restricted;
Fig. 17 is a section view when the shape of inflation of the airbag in Fig. 16 is restricted;
Fig. 18 is a section view after when the restriction of shape of inflation of the airbag of the airbag and the airbag system in Fig. 16 has been released;
Fig. 19(a) is a plan view of an airbag of an embodiment and
Fig. 19(b) is a section view taken along a line B-B in Fig. 19(a); and
Fig. 20 is a plan view showing anther exemplary structure of the strap.

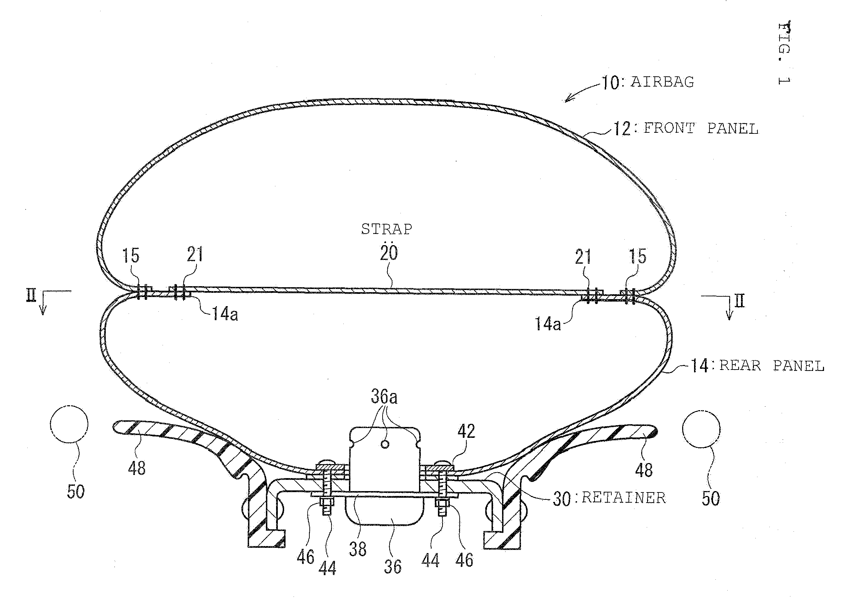

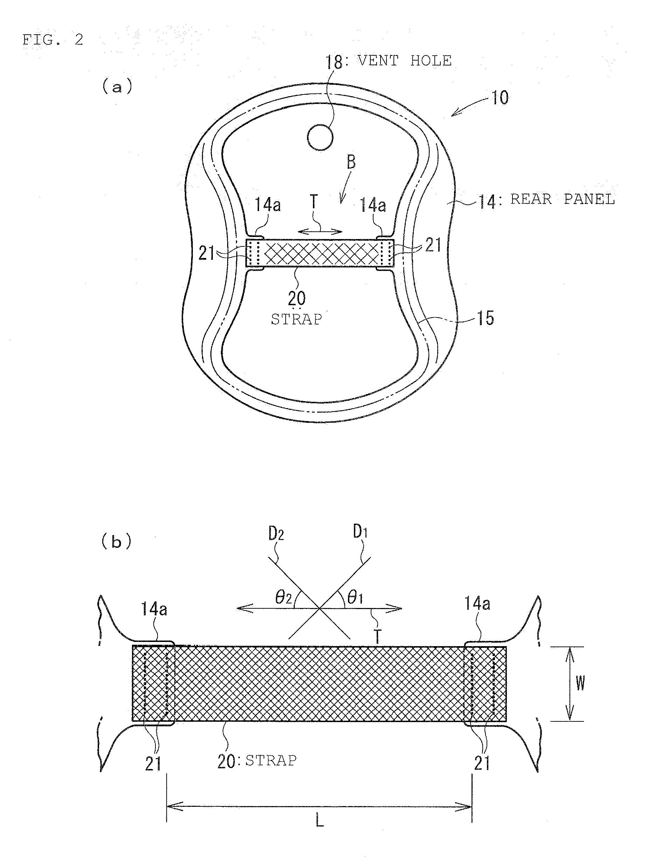

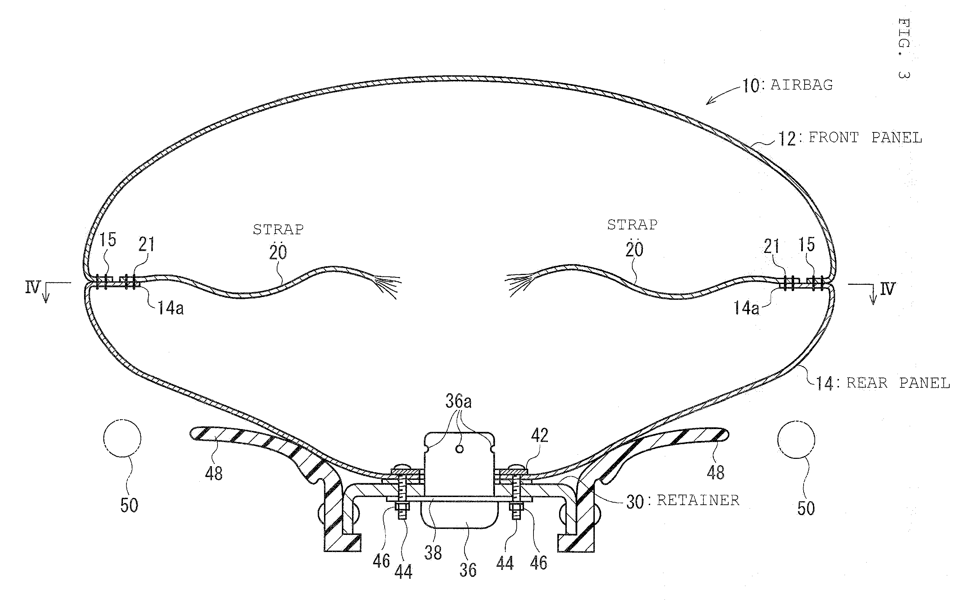

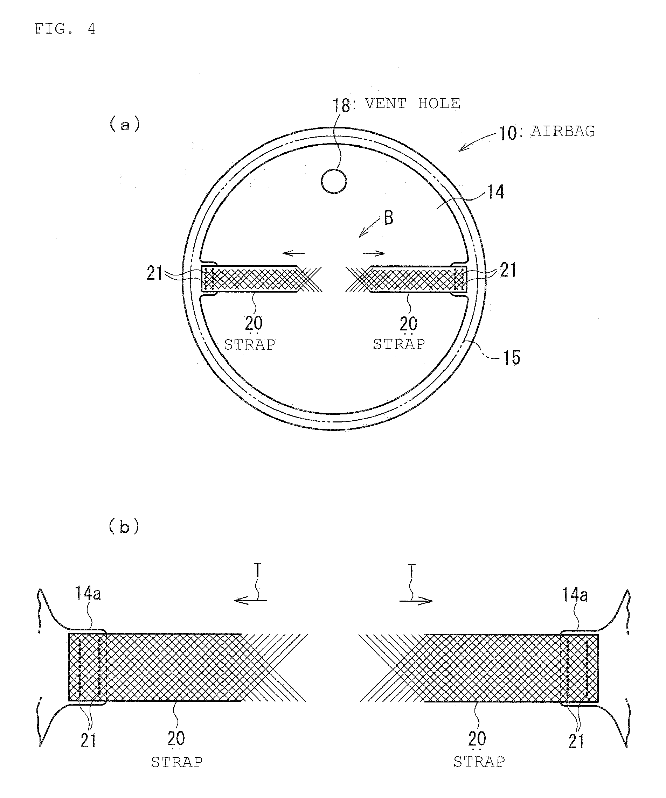

Fig. 1 is a section view when a shape of inflation of an airbag of the airbag and airbag system of an embodiment is restricted, Fig. 2(a) is a section view taken along a line II-II in Fig. 1, Fig. 2(b) is an enlarged view of a part B (around a strap) in Fig. 1(a), Fig. 3 is a section view after when the restriction of shape of inflation of the airbag of the airbag and the airbag system has been released, Fig. 4(a) is a section view taken along a line IV-IV in Fig. 3 and Fig. 4(b) is an enlarged view of a part B (around a strap) in Fig. 4(a).

It is noted that in the following explanation, up and down directions and right and left directions meet with up and low directions and right and left directions of a steering wheel when the steering wheel is set at an attitude of steering a vehicle straightforwardly.

An airbag 10 of the present embodiment is an airbag for driver's seat of the vehicle.

This airbag 10 is formed into a shape of a bag by seaming outer peripheral parts of a front panel 12 and a rear panel 14 respectively made of circular fabric by yawns or the like.

The rear panel 14 is provided with an opening for an inflator (reference numerals are omitted) and a vent hole 18 (Figs. 2 and 4). The opening for the inflator is disposed at a center of the rear panel 14. Bolt inserting holes (reference numerals are omitted) are provided around the opening for the inflator.

A strap 20 is provided within the airbag 10 to restrict a shape of inflation of the airbag 10. The strap 20 connects right and left sides of the airbag 10 in the present embodiment.

Selvage-like connecting pieces 14a and 14a project respectively from peripheral parts of the both right and left sides of the rear panel 14 and both ends of the strap 20 is seamed to these connecting pieces 14a and 14a by seams 21 in the present embodiment.

However, the method for connecting the ends of the strap 20 with the airbag 10 is not limited to this method. For instance, selvage-like connecting pieces may project from both sides of the front panel 12 and the rear panel 14 and may be overlapped to seam with the ends of the strap 20. Still more, these connecting pieces may be omitted and the ends of the strap 20 may be interposed between the peripheral parts of the front panel 12 and the rear panel 14 to seam together. Or, the ends of the strap 20 may be seamed to parts other than the peripheral parts of the front panel 12 or the rear panel 14.

The strap 20 is a thin and long strip and whose both ends in its longitudinal direction are connected the connecting pieces 14a, respectively, in the present embodiment. That is, the longitudinal direction of the strap 20 is a direction of tensile force applied to the strap 20 when the airbag 10 inflates. Preferably, a length L in the tensile force of the strap 20 is larger than a width W in a direction crossing with the tensile direction in the present invention.

The strap 20 is made of fabric worn by warps and woofs. The strap 20 is what the fabric is cut out so that fine lines of the fabric (in directions in which the warps and woofs extend) run in an oblique direction with respect to the longitudinal direction and the tensile direction of the strap 20.

As shown in Fig. 2(b), preferably, angles between the fine line directions of the fabric and the tensile direction T of the strap 20, i.e., an angle θ₁ between the warp extension direction D₁ of the fabric and the tensile direction T of the strap 20 and an angle θ₂ between the woof extension direction D₂ of the fabric and the tensile direction T of the strap 20, are 30 to 60° and more specifically 40 to 50°, respectively.

Specifically, the strap 20 is preferably arranged so that those angles θ₁ and θ₂ are approximately 45° and the length of the strap 20 in the tensile direction is larger than the width W in the direction crossing with that in the invention. By arranging as described above, any of the warps and woofs of the fabric making the strap 20 does not continue from one end to the other end in the tensile direction of the strap 20 and are disconnected on the way of the strap 20 in the tensile direction.

This strap 20 is arranged so that it is ruptured by tensile force T (Fig. 2) applied to the strap 20 when internal pressure of the airbag 10 exceeds predetermined pressure when the airbag 10 inflates.

A retainer 30 for attaching the airbag 10 is provided with an inflator attaching port (reference numeral is omitted) that overlaps with an inflator opening of the rear panel 14 at center of the retainer and bolt inserting holes (reference numeral is omitted) that overlap with the bolt inserting holes of the rear panel 14.

An inflator 36 is substantially columnar and is provided with an inflator 36a at a side peripheral face on an edge side of a cylindrical direction thereof. A flange 38 for fixing the inflator projects from the side peripheral face of a midway part (on a side of rear end from the inflator 36a) in the cylindrical direction of the inflator 36. The flange 38 is provided with bolt inserting holes (reference numerals are not omitted) that overlap with the bolt inserting holes of the retainer 30. The edge side of the inflator 36 is fitted into the inflator attaching port of the retainer 30.

A peripheral edge of the of the inflator opening of the rear panel 14 is pressed to a peripheral edge of the inflator attaching port of the retainer 30 by a pressing ring 42 in attaching the airbag 10 to the retainer 30. The edge of the inflator 36 fitted into the inflator attaching port is then inserted into the airbag 10 via the inflator opening.

At this time, the airbag 10 and the inflator 36 are fixed to the retainer 30 by inserting stud bolts 44 of the pressing ring 42 to the respective bolt inserting holes of the rear panel 14, the retainer 30 and the flange 38 and by fastening nuts 46 to edges thereof.

After that, an airbag system is constructed by folding the airbag 10 and by attaching a module cover 48 to the retainer 30 so as to cover the folded airbag 10. However, the airbag 10 may be folded in advance before attaching to the retainer 30 of the airbag 10.

This airbag system is set to a steering wheel 50 of the vehicle.

The inflator 36 operates and gas is injected within the airbag 10 when the vehicle carrying the airbag system collides. The airbag 10 inflates by this gas, pushes the module cover 48 open and develops within a vehicle cabin to constrain an occupant of the driver's seat.

Because the strap 20 connects the right and left sides of the airbag 10 and restricts inflation of the airbag 10 to sides of the both right and left sides of the airbag 10 until when the internal pressure of the airbag 10 exceeds the predetermined pressure as shown in Figs. 1 and 2(a), the airbag 10 inflates and develops quickly by the gas from the inflator 36 without using a high output inflator 36.

After that, the strap 20 ruptures due to tensile force applied to the strap 20 when the internal pressure of the airbag 10 exceeds the predetermined pressure.

Because the strap 20 is made of the fabric, the oblique angles θ₁ and θ₂ between the warps and woofs of the fabric and the tensile direction T of the strap 20 are approximately 45° and the length of the strap 20 in the tensile direction is larger than the width W in the direction crossing with that in the present embodiment, any of the warps and woofs of the fabric making the strap 20 does not continue from one end to the other end of the strap 20 and are disconnected on the way of the strap 20 in the tensile direction.

Therefore, when the predetermined or more tensile force is applied to the strap 20, texture of the fabric becomes loose and the strap ruptures as if the warps and woofs of the fabric making the strap 20 are pulled out of the texture of the fabric.

Due to the rupture of the strap 20, the connection between the both right and left sides of the airbag 10 is released and the both right and left sides of the airbag 10 inflate toward respective sides as shown in Figs. 3 and 4(a). It suppresses an increase of the pressure within the airbag 10 so that the airbag 10 receives the occupant softly.

It is noted that the fine line of the fabric composing the strap is substantially the same direction with the tensile direction of the strap, one of the warps and woofs of the fabric is continuous from one end to the other end of the strap. Therefore, the yarns continuous from one end to the other end of the strap need to be in order for the strap to rupture. However, because rupture strength of the yarn largely depends on temperature and is apt to be influenced by heat of the injection gas from the inflator when the strap is arranged to rupture when the yarn is cut as described above, timing when this yarn cuts due to the shape and disposition of the inflator, i.e., timing when the strap rupture, is apt to vary.

In contrary to that, because the fine line direction of the fabric is oblique to the tensile direction of the strap 20 in the strap 20 of the airbag 10 of the present embodiment and the warps and woofs of the fabric are disconnected on the way of the strap 20 in the tensile direction from the beginning, the warps and woofs are pulled out of the texture of the fabric without being cut. Thereby, the texture of the fabric becomes loose and the strap 20 ruptures. Therefore, the strap 20 is hardly influenced by heat of the injection gas from the inflator 36 when it ruptures.

Accordingly, the timing when the strap 20 ruptures hardly varies by the shape and disposition of the inflator 36 in this airbag 10. Still more, the airbag system having this airbag 10 has a high degree of freedom in selection of the inflator 36 and in disposition of the inflator 36.

Although only one strap 20 is provided within the airbag 10 in the embodiment described above, a plurality of straps may be provided in the airbag according to the invention.

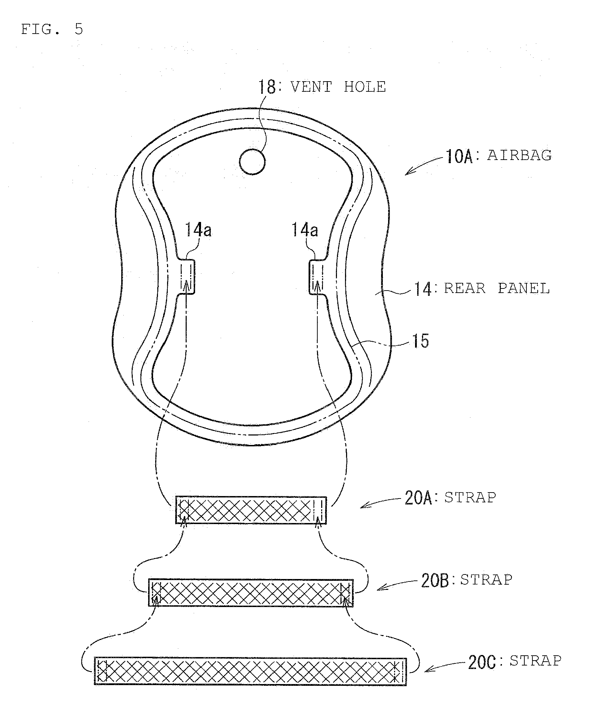

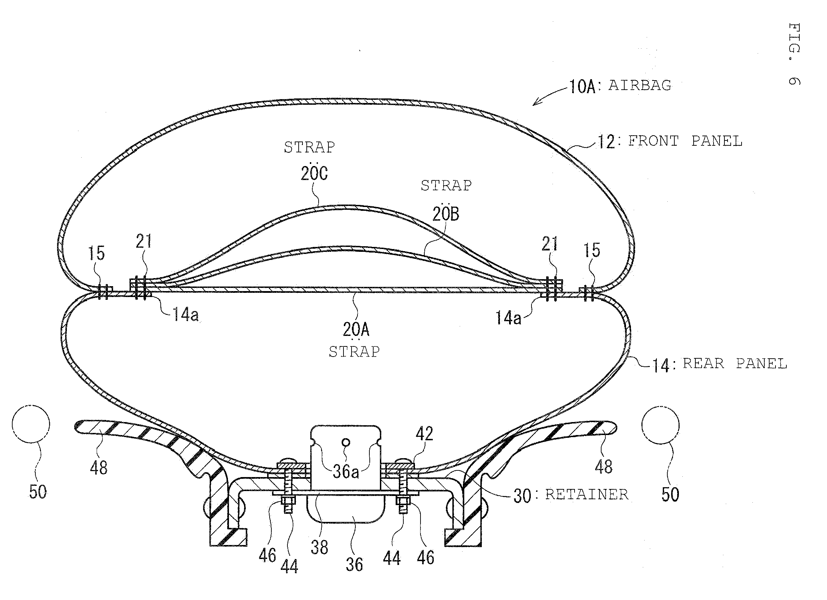

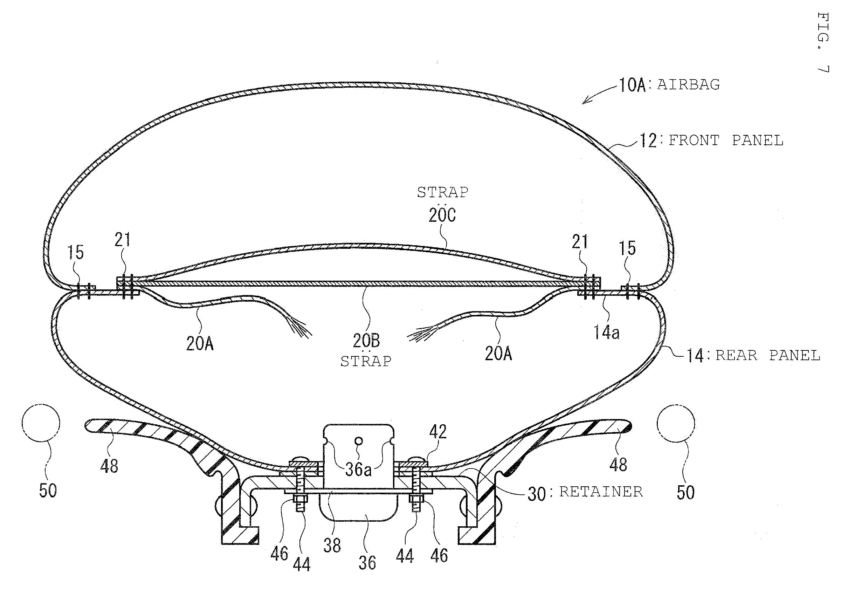

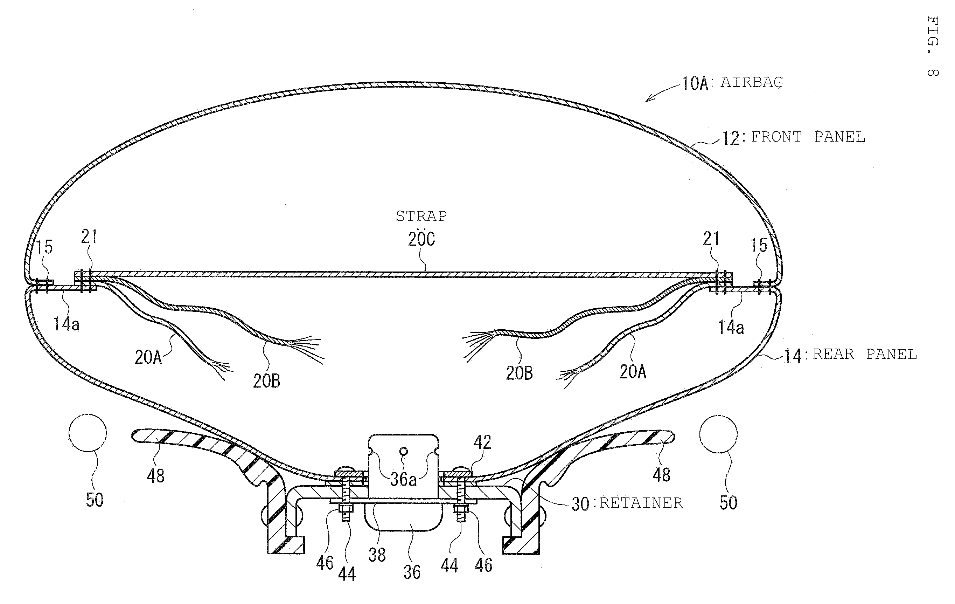

Fig. 5 is an exploded plan view of the airbag of another embodiment, Fig. 6 is a section view when the shape of inflation of the airbag and the airbag system is restricted, Fig. 7 is a section view showing a state when a first strap of the airbag has ruptured and Fig. 8 is a section view showing a state when a second strap of the airbag has ruptured. It is noted that in Fig. 5, the front panel of the airbag is not shown.

The airbag 10A of this embodiment is provided with three long straps 20A, 20B and 20C having different lengths. The strap 20A is the shortest, the strap 20C is the longest and the strap 20B has an intermediate length between the both.

The selvage-like connecting pieces 14a and 14a project respectively from the peripheral parts of the both right and left sides of the rear panel 14 also in this embodiment. One end is overlapped with one connecting piece 14a to be seamed by the seam 21 and the other end is overleaped with the other connecting piece 14a to be seamed by the seam 21 in all of the straps 20A through 20C in the present embodiment. That is, the straps 20A through 20C are bridged between the common connecting pieces 14 and 14a.

Structures of these straps 20A through 20C is the same with the strap 20 in Figs. 1 through 4 described above other than that their lengths differ from each other.

The other structures of the airbag 10A of the present embodiment and of the airbag system having the airbag 10A are the same with the embodiment in Figs. 1 through 4.

When the airbag 10A inflates, the airbag 10A inflates until when the shortest strap 20A is stretched at first as shown in Fig. 6. Thereby, inflation of the right and left side portions of the airbag 10A is restricted and internal pressure of the airbag 10A quickly rises by the gas from the inflator 36.

After that, when the pressure within the airbag 10A exceeds a predetermined pressure, the strap 20A ruptures due to tensile force applied to the strap 20A. Thereby, the both right and left side portions of the airbag 10A inflate to the sides until when the second long strap 20B is stretched as shown in Fig. 7.

When the internal pressure of the airbag 10A exceeds the predetermined pressure again after that, the strap 20B ruptures due to tensile force applied to the strap 20B. Thereby, the both right and left side portions of the airbag 10A inflate further to the sides until when the longest strap 20C is stretched.

When the internal pressure of the airbag 10A exceeds the predetermined pressure again after that, the strap 20C ruptures due to tensile force applied to the strap 20C. Thereby, the both right and left side portions of the airbag 10A inflate to the sides in maximum.

Because the airbag 10A inflates thus stepwise, it becomes possible to increase the internal pressure of the airbag 10A quickly after the start of inflation of the airbag 10A, to prevent the internal pressure of the airbag 10A from excessively dropping every time when the respective straps 20A through 20C rupture and to keep the internal pressure of the airbag 10A high.

It is noted that although the three straps 20A through 20C having the different lengths are provided in the present embodiment, two or four or more straps having different lengths may be provided.

Although the straps 20A through 20C are bridged between the common connecting pieces 14A and 14a in this embodiment, a plurality of straps may be disposed so as to connect different parts of the airbag.

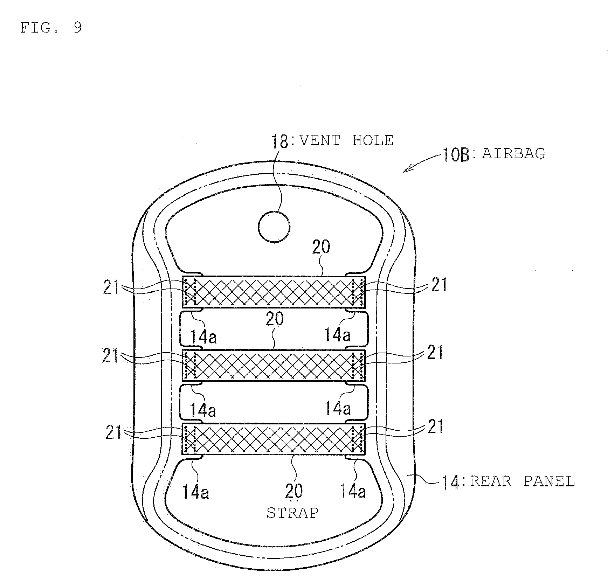

Fig. 9 is a plan view showing one different exemplary disposition of the strap. It is noted that the front panel of the airbag is not shown in Fig. 9.

Three straps 20 are disposed in parallel while differing their position in a vertical direction within an airbag 10B in the airbag 10B of this embodiment.

The three connecting pieces 14a are provided by differential the positions in a peripheral direction of the rear panel 14 in peripheral edges of the both right and left ends of the rear panel 14 in this embodiment. The straps 20 are bridged respectively between an upper connecting piece 14a on the left side of the rear panel 14 and an upper connecting piece 14a on the right side, between a middle connecting piece 14a on the left side of the rear panel 14 and a middle connecting piece 14a on the right side and between a lower connecting piece 14a on the left side of the rear panel 14 and a lower connecting piece 14a on the right side.

The structure of each strap 20 is the same with the strap 20 in Figs. 1 through 4 described above. The structure of others of the airbag 10B of this embodiment are the same with the airbag 10 in Figs. 1 through 4.

It is noted that all of the respective straps 20 have the same length in this embodiment, the length of each strap may be different. Or, a group of a plurality of straps having different lengths may be bridged between the upper connecting pieces 14a and 14a, between the middle connecting pieces 14a and 14a and between the lower connecting pieces 14a and 14a like the embodiment in Figs. 5 through 8.

Although all of the straps 20 are disposed in parallel in one direction in this embodiment, at least one strap 20 may be disposed so as to extend in a different direction.

Although three straps 20 are provided in this embodiment, only two or four more straps may be provided.

Still more, places other than the both right and left sides of the airbag may be connected by the strap.

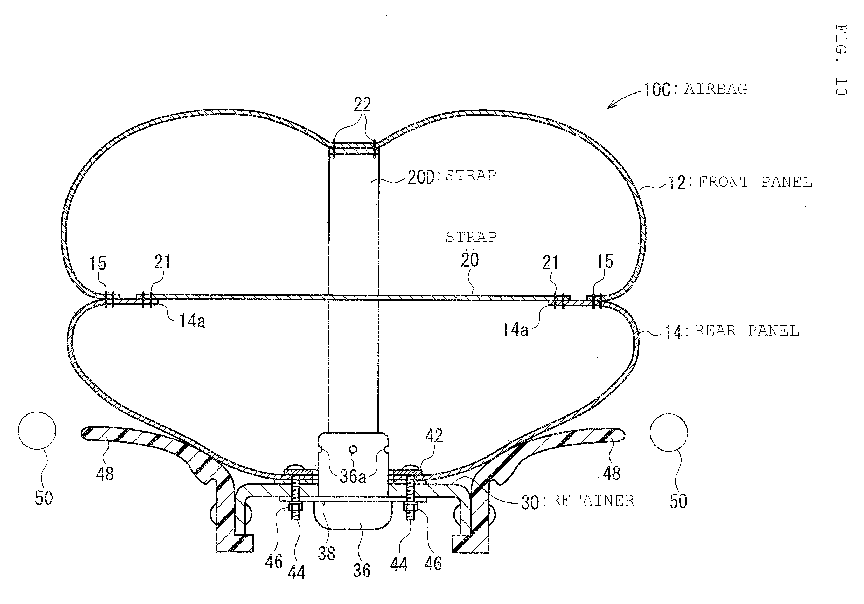

Fig. 10 is a section view showing another one exemplary disposition of the strap.

A strap 20 connecting the both right and left sides of the airbag 10C and a strap 20D connecting the front panel 12 and the rear panel 14 of the airbag 10C are provided in the airbag 10C of the present embodiment.

The structure of the strap 20 and the method for connecting to the both right and left sides of the airbag 10C are the same with the embodiment in Figs. 1 through 4.

One end of the strap 20D is seamed around a center of the front panel 12 by a seam 22 and another end thereof is seamed around a center of the rear panel 14 (around peripheral edge of the inflator opening) by a seam (not shown).

However, the disposition of the strap 20D is not limited to that. For example, the strap 20D may be disposed so as to connect parts on outer peripheral sides of the front panel 12 and the rear panel 14, rather than the centers thereof.

The front panel 12 and the rear panel 14 of the airbag 10C may be connected by a plurality of straps 20D whose positions are differentiated from each other.

This strap 20D also has the same structure with the strap 20. However, the strap 20D connecting the front panel 12 with the rear panel 14 may be one having high strength that does not rupture even when the internal pressure of the airbag 10C exceeds the predetermined temperature.

Although not shown, the sides of the airbag may be connected with the front panel 12 or the rear panel 14 by the strap in the invention.

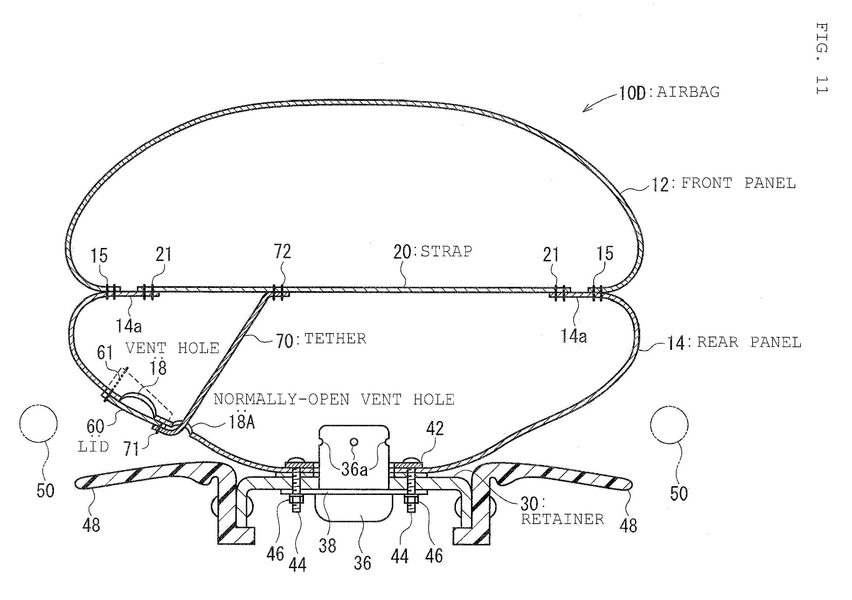

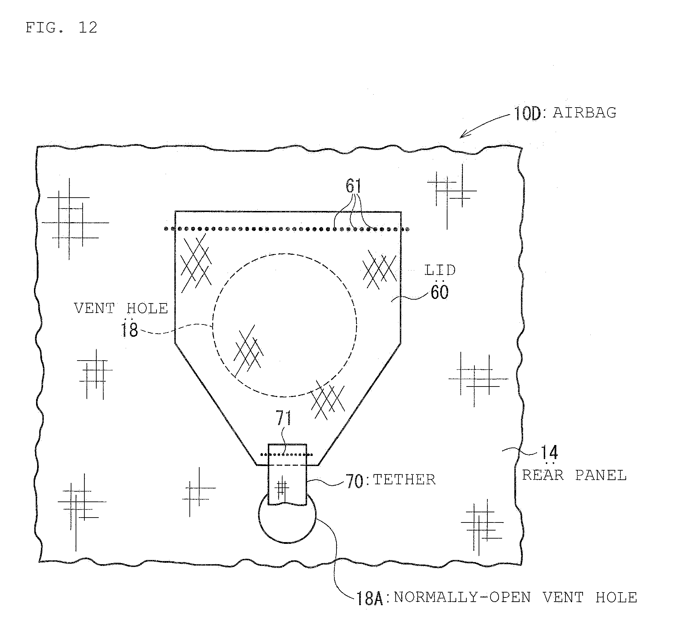

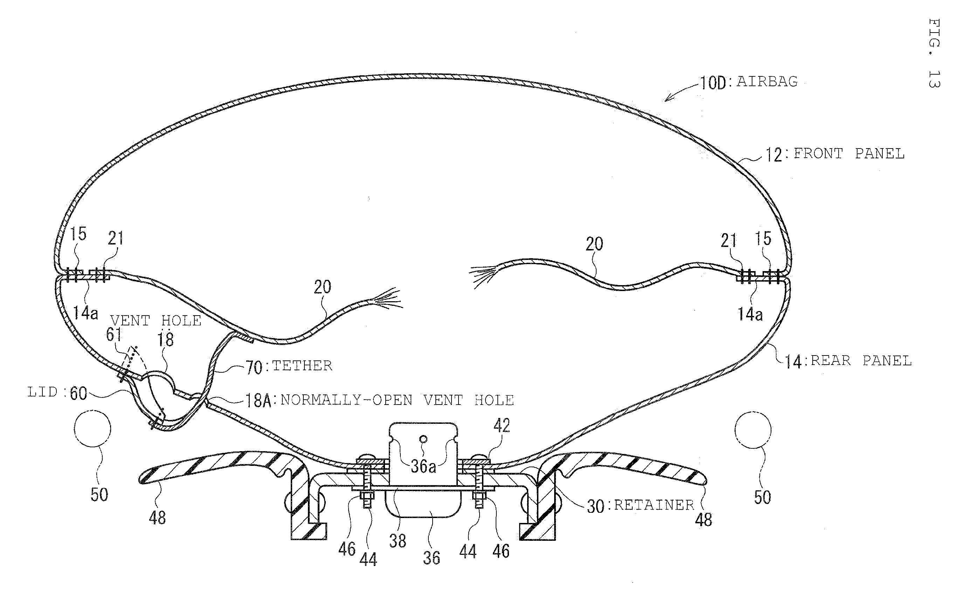

Fig. 11 is a section view when the shape of inflation of the airbag and the airbag system of another embodiment is restricted, Fig. 12 is a plan view around a vent hole of the airbag and Fig. 13 is a section view after when the restriction of shape of inflation of the airbag of the airbag and the airbag system has been released.

The strap 20 connecting the both right and left sides of the airbag 10D is provided within the airbag 10D also in the airbag 10D of this embodiment. The structure of the strap 20 and the method for connecting to the both right and left sides of the airbag 10 are the same with the embodiment in Figs. 1 through 4.

A lid 60 covering a vent hole 18 so as to overlap with the rear panel 14 from the outside of the airbag 10D and a tether 70 as a member connecting the lid 60 with the strap 20 are provided in this embodiment. A normally-open vent hole 18A that is normally opened is also provided at an area of the rear panel 14 near the vent hole 18 and not covered by the lid 60.

The lid 60 is made of a fabric having a substantially trapezoidal shape and overlaps with the vent hole 18 by such an attitude that a short side thereof is disposed on the side of the normally-opened vent hole 18A rather than the vent hole 18 and a long side thereof is disposed on a side opposite from the normally-opened vent hole 18A while interposing the vent hole 18 therebetween.

The lid 60 is seamed to the rear panel 14 by a seam 61 along the long side on a side opposite from the normally-opened vent hole 18A while interposing the vent hole 18 therebetween.

One end of the tether 70 is connected around middle of the short side of the lid 60. A reference numeral 71 denotes a seam by which one end of the tether 70 is seamed to the lid 60. It is noted that although the tether 70 is provided separately from the lid 60 in this embodiment, the tether 70 may be provided in a body with the lid 60.

The tether 70 is inserted through the normally-opened vent hole 18A and the other end is connected to midway portion of the strap 20 in the longitudinal direction by a seam within the airbag 10D.

Other structures of the airbag 10D and the airbag system having this airbag 10D are the same with the embodiment in Figs. 1 through 4.

When the airbag 10D inflates, the strap 20 is stretched between the both right and left sides of the airbag 10D as shown in Fig. 11 until when the internal pressure of the airbag 10D exceeds the predetermined pressure to restrict the airbag 10D from inflating to the sides of the both right and left sides.

At this time, the tether 70 is pulled to the inner sides of the airbag 10D by the strap 20 and the lid 60 is stretched along an outer face of the rear panel 14 through the tether 70 and overlaps with the vent hole 18. Thereby, the vent hole 18 is closed and the gas is restricted from discharging out of the vent hole 18.

Thus, the strap 20 restricts the inflation of the both right and left sides of the airbag 10D and restricts the gas from discharging out of the vent hole 18 until when the internal pressure of the airbag becomes the predetermined pressure, so that the airbag 10D inflates quickly even when a relatively low output inflator 36 is used.

After that, the strap 20 ruptures as shown in Fig. 13 when the internal pressure of the airbag 10D exceeds the predetermined pressure. Thereby, the connection of the both right and left sides of the airbag 10D is released and the both right and left sides of the airbag 10D inflate respectively to the sides. Thereby, the increase of pressure within the airbag 10D is suppressed and the occupant is received softly by the airbag 10D.

Because the strap 20 ruptures, the force pulling the tether 70 to the inside of the airbag 10D is also released. Therefore, the stretch of the lid 60 is also released, the lid 60 separates from the vent hole 18 by gas pressure within the airbag 10D and the vent hole 18 is opened. Thereby, the gas discharges out of the airbag 10D through the vent hole 18, absorbing an impact given to the occupant.

Although the lid 60 covers the vent hole 18 from the outside of the airbag 10 in the present embodiment, the invention may be arranged so that the lid cover the vent hole from the inside of the airbag.

Although the strap extends straightforwardly in each embodiment described above, the shape of the strap is not limited to that.

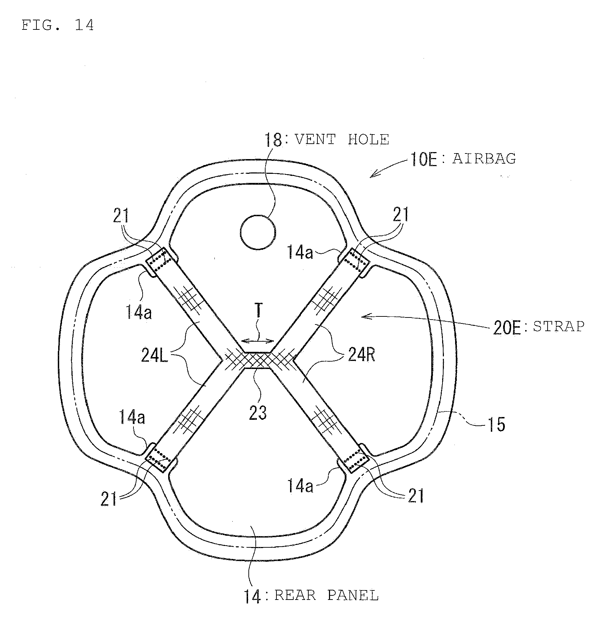

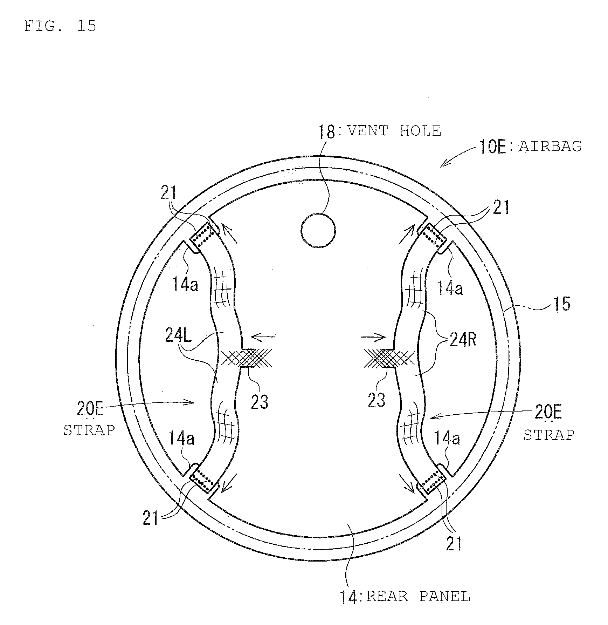

Fig. 14 is a plan view when the shape of inflation of the airbag of a still other embodiment is restricted and Fig. 15 is a section view when the restriction of shape of inflation of the airbag has been released. It is noted that the front panel of the airbag is not shown in Figs. 14 and 15.

A strap 20E has forked portions 24L and 24R where both right and left sides are forked respectively in upper and lower slant directions while interposition a center portion 23 and a shape of substantially letter X as shown in Fig. 14 in an airbag 10E of the present embodiment.

Selvage-like connecting pieces 14a are provided respectively at upper slant left side, lower slant left side, upper slant right side and lower slant right side of a peripheral part of the rear panel 14 and both ends of the forked portion 24L on the left side of the strap 20E are seamed respectively to the connecting pieces 14a of the upper slant left side and the lower slant left side by seams 21 and the both ends of the forked portion 24R on the right side are seamed to the connecting pieces 14a by seams 21 in the present embodiment.

When the airbag 10E inflates, the forked portion 24L on the left side of the strap 20E are pulled to the upper and lower slant left directions, the forked portion 24R on the right side are pulled to the higher and lower slant right directions and tensile force is applied to the center portion 23 linking them in a lateral direction.

In this embodiment, the center portion 23 is a planned rupture section that ruptures when the internal pressure of the airbag 10E exceeds the predetermined pressure.

This strap 20E is made of a fabric and is arranged so that a fine line direction of the fabric runs in an oblique direction with respect to the tensile direction T (Fig. 14) applied to the center portion 23, i.e., in the lateral direction.

It is noted that the fine line direction of the fabric is slanted by about 45° with respect to the tensile direction T applied to the center portion 23 also in this embodiment.

The other structure of the airbag 10E is the same with the airbag 10 in Figs. 1 through 4 described above.

When the airbag 10E inflates, the strap 20E having the shape of X restricts the inflation by pulling the upper slant left side, lower slant left side, upper slant right side and lower slant right side of the peripheral part of the rear panel 14 of the airbag 10E to the center side as shown in Fig. 14.

When the internal pressure of the airbag 10E exceeds the predetermined pressure after that, the center portion 23 of the strap 20E ruptures due to the tensile force applied to the strap 20E as shown in Fig. 15. Thereby, the upper slant left side, lower slant left side, upper slant right side and lower slant right side of the peripheral part of the airbag 10E start to inflate respectively in a radial direction. Thereby, the increase of the pressure within the airbag 10E is suppressed and the airbag 10E receives the occupant softly.

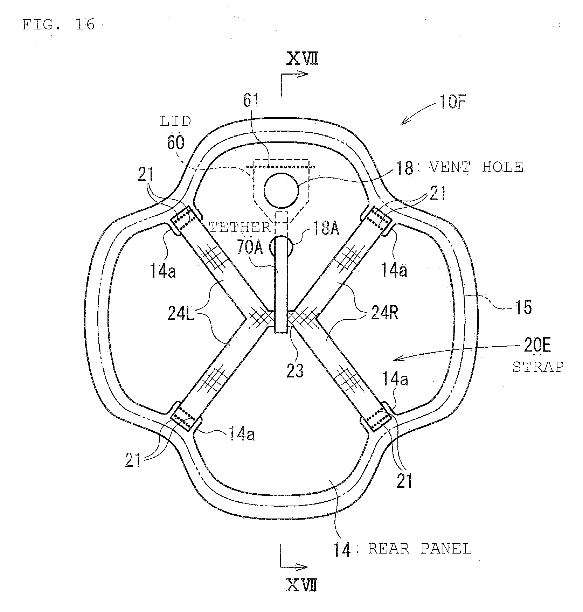

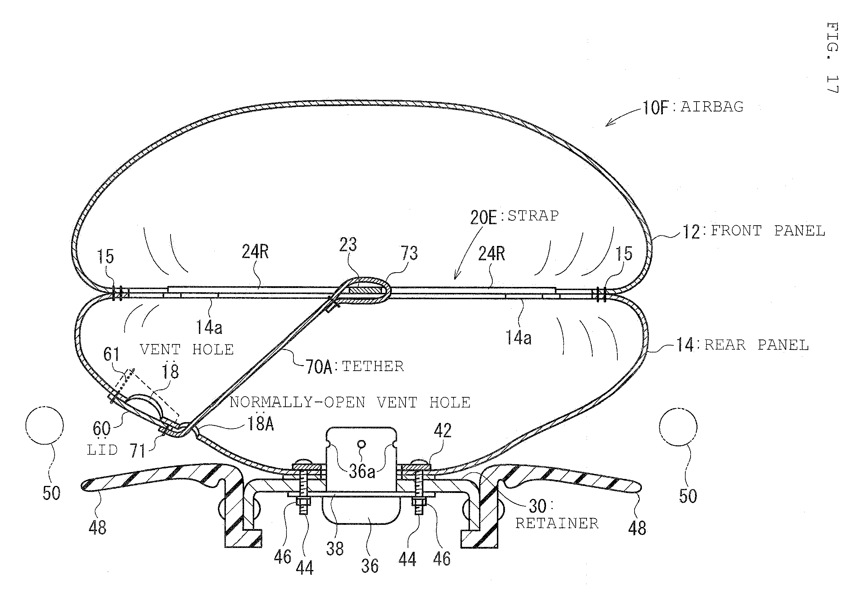

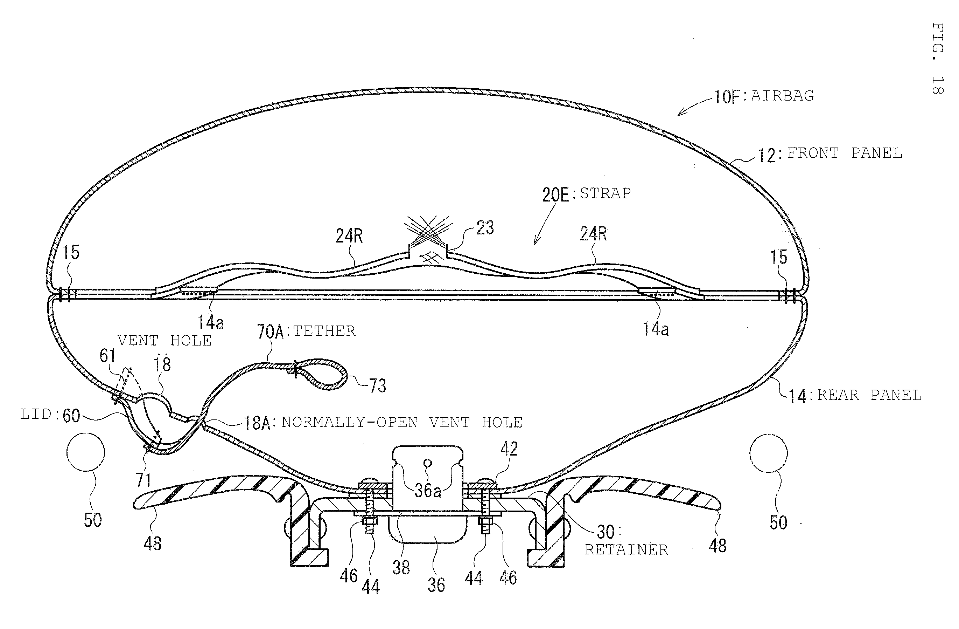

Fig. 16 is a plan view when the shape of inflation of the airbag of a still other embodiment is restricted, Fig. 17 is a section view when the shape of inflation of the airbag is restricted and Fig. 18 is a section view after when the restriction of shape of inflation of the airbag has been released.

An airbag 10F of this embodiment is arranged to have the lid 60 for covering the vent hole 18 and a tether 70A as a connecting member for connecting the lid 60 with the strap 20 like the embodiment in Figs. 11 through 13 in the airbag 10E in Figs. 14 and 15 described above.

The lid 60 covers the vent hole 18 so as to overlap with the rear panel 14 from the outside of the airbag 10F also in this embodiment. The lid 60 is made of a fabric having a substantially trapezoidal shape and overlaps with the vent hole 18 by such an attitude that a short side thereof is disposed on the side of the normally-opened vent hole 18A rather than the vent hole 18 and a long side thereof is disposed on a side opposite from the normally-opened vent hole 18A while interposing the vent hole 18 therebetween also in this embodiment. The lid 60 is seamed to the rear panel 14 by a seam 61 along the long side on a side opposite from the normally-opened vent hole 18A while interposing the vent hole 18 therebetween.

A normally-open vent hole 18A that is normally opened is also provided at an area of the rear panel 14 near the vent hole 18 and not covered by the lid 60.

One end of the tether 70A is seamed to the lid 60 on the outside of the airbag 10F by the seam 71 and the other side is pulled into the airbag 10F through the normally-opened vent hole 18A. A ringed portion 73 is formed at the other end of the tether 70A in this embodiment. The lid 60 is connected with the center portion 23 of the strap 20E by inserting the center portion 23 of the strap 20E through the ringed portion in this embodiment.

The other structure of the airbag 10E is the same with the airbag 10E in Figs. 14 and 15.

When the airbag 10E inflates, the X-shaped strap 20E pulls the upper slant left side, lower slant left side, upper slant right side and lower slant right side of the peripheral part of the airbag 10E and restricts the inflation as shown in Fig. 16.

At this time, the tether 70A is pulled to the inner side of the airbag 10E by the strap 20E and the lid 60 is stretched along the outer face of the rear panel 14 through the tether 70A and overlaps with the vent hole 18. Thereby, the vent hole 18 is closed and the gas is restricted from discharging out of the vent hole 18.

Thus, the strap 20E restricts the inflation of the peripheral portion of the airbag 10F and restricts the gas from discharging out of the vent hole 18 until when the internal pressure of the airbag becomes the predetermined pressure, so that the airbag 10F inflates quickly even when a relatively low output inflator 36 is used.

When the internal pressure of the airbag 10F exceeds the predetermined pressure after that, the center portion 23 of the strap 20E ruptures due to the tensile force applied to the strap 20E as shown in Fig. 18. Thereby, the upper slant left side, lower slant left side, upper slant right side and lower slant right side of the peripheral part of the airbag 10F start to inflate respectively in a radial direction. Thereby, the increase of the pressure within the airbag 10F is suppressed and the airbag 10F receives the occupant softly.

Because the strap 20E ruptures, the connection of the tether 70A with the strap 20E is released and the force pulling the tether 70A to the inside of the airbag 10F is also released. Therefore, the stretch of the lid 60 is also released, the lid 60 separates from the vent hole 18 by gas pressure within the airbag 10F and the vent hole 18 is opened. Thereby, the gas discharges out of the airbag 10F through the vent hole 18, absorbing an impact given to the occupant.

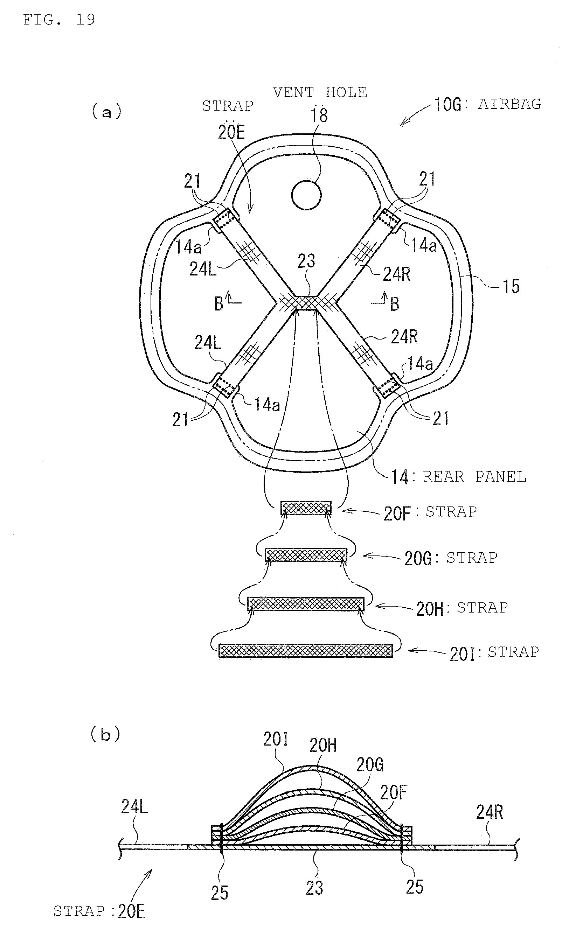

Fig. 19(a) is a plan view of an airbag of a still other embodiment and Fig. 19(b) is a section view taken along a line B-B in Fig. 19(a). It is noted that the front panel of the airbag is not shown in Fig. 19(a).

An airbag 10G of this embodiment has a structure in which the left and right forked portions 24L and 24R of the strap 20E are linked by a plurality (four in this embodiment) of thin and long straps 20F, 20G, 20H and 201 having different lengths.

In this embodiment, lengths of the straps 20F, 20G, 20H and 20I increase in this order and the length of the shortest strap 20F is longer than a length of the center portion 23 of the strap 20E in the tensile direction, i.e., the lateral direction. The structure of the straps 20F through 20I is the same with the strap 20 in Figs. 1 through 4 described above other than that their length differ from each other.

As shown in Fig, 19(a), these straps 20F through 20I are seamed such that the left ends thereof are seamed around the left end (junction of the forked portion 24L on the left side and the center portion 23) of the center portion 23 of the strap 20E disposed the longitudinal direction thereof as the lateral direction by a seam 25 and the right ends thereof are seamed to the right end (junction of the forked portion 24R on the right side and the center portion 23) of the center portion 23 of the strap 20E by a seam 25.

The other structure of this airbag 10G is the same with the airbag 10E in Figs. 14 and 15 described above.

When the airbag 10G inflates, the whole X-shaped strap 20E is stretched until when the internal pressure of the airbag 10G exceeds the predetermined pressure and pulls the upper slant left side, lower slant left side, upper slant right side and lower slant right side of the peripheral part of the airbag 10G, restricting the inflation. At this time, the center portion 23 of the strap 20E is pulled and is stretched to the right and left by the left and right forked portions 24L and 24R and the straps 20F through 20I longer than the center portion 23 are kept to be loose.

When the internal pressure of the airbag 10F exceeds the predetermined pressure after that, the center portion 23 of the strap 20E ruptures due to the tensile force applied to the strap 20E. Thereby, the both right and left sides of the airbag 10G start to inflate to the sides until when the strap 20F that is longer than the center portion 23 and is shortest among the straps 20F through 20I is stretched.

When the internal pressure of the airbag 10G exceeds the predetermined pressure again after that, the strap 20F ruptures due to the tensile force applied to the strap 20F. Thereby, the both right and left sides of the airbag 10G start to inflate toward the sides until when the next long strap 20G is stretched next.

When the internal pressure of the airbag 10G exceeds the predetermined pressure again after that, the strap 20G ruptures due to the tensile force applied to the strap 20G. Thereby, the both right and left sides of the airbag 10G start to inflate further toward the sides until when the next long strap 20J is stretched next.

When the internal pressure of the airbag 10G exceeds the predetermined pressure again after that, the strap 20H ruptures due to the tensile force applied to the strap 20H. Thereby, the both right and left sides of the airbag 10G start to inflate further toward the sides until when the longest strap 20I is stretched.

When the internal pressure of the airbag 10G exceeds the predetermined pressure again after that, the strap 20I ruptures due to the tensile force applied to the strap 20I. Thereby, the both right and left sides of the airbag 10G start to inflate toward the sides.

Because the airbag 10G inflates thus stepwise, it becomes possible to increase the internal pressure of the airbag 10A quickly after the start of inflation of the airbag 10G, to prevent the internal pressure of the airbag 10G from excessively dropping every time when the center portion 23 of the strap 20E and the respective straps 20H through 20I rupture and to keep the internal pressure of the airbag 10G high.

It is noted that although the four straps 20A through 20C having the different length from that of the center portion 23 of the strap 20E are provided in the present embodiment, one to three or five or more straps having lengths different from that of the center portion 23 may be provided. A strap shorter than the center portion 23 may be also provided.

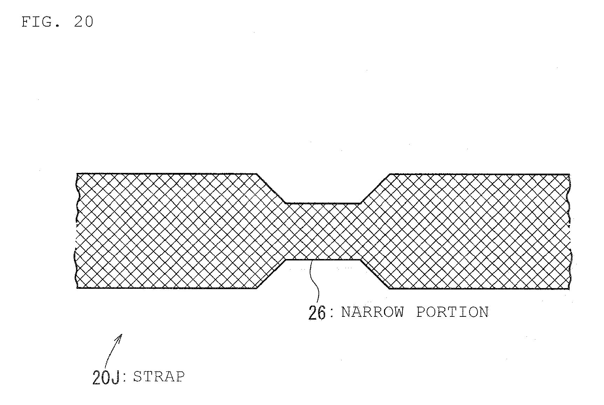

Although the straps 20, 20A through 20D, 20F through 20I and the center portion 23 of the strap 20E have a width in a direction crossing with the tensile direction is uniform from one end to the other end in the tensile direction in the respective embodiments described above, there may be provided a narrow width portion 26 whose width is partially narrow on a midway portion in the tensile direction of a strap 20J in Fig. 20.

Because stress concentrates on the narrow width portion 26 when tensile force is applied to the strap 20J, the strap 20J ruptures smoothly by forming the narrow width portion 26 in the strap 20J as described above.

It is noted that although the narrow width portion 26 is formed so as to cut out both edges of the strap 20J in the embodiment shown in Fig. 20, the method for forming the narrow width portion is not limited to that. For instance, the width of the strap may be narrowed by providing a hole on the midway portion in the direction crossing with the tensile direction of the strap.

The respective embodiments described above are examples of the invention and the invention is not limited to the respective embodiments.

For instance, although the strap has the straight or X-letter shape in the embodiments described above, the shape of the strap is not limited to them and the strap may have various shapes such as a letter Y and a mark * for example.

The airbag and the airbag system in each embodiment described are used for the driver's seat of the vehicle, the invention is applicable to the airbag and the airbag system of various uses other than the driver's seat of the vehicle.

## Claims

1. An airbag having an airbag inflation shape restricting strap that ruptures due to tensile force applied to the strap when internal pressure of the airbag exceeds a predetermined pressure, wherein the strap is made of a fabric and a fine line direction of the fabric runs in a direction oblique to a tensile direction of the strap.

2. The airbag according to Claim 1, wherein the fine line direction runs obliquely by 30 to 60° with respect to the tensile direction.

3. The airbag according to Claim 2, wherein the fine line direction runs obliquely by 40 to 50° with respect to the tensile direction.

4. The airbag according to anyone of Claims 1 through 3, wherein a plurality of straps including at least first and second straps is provided; and
the first and second straps are what the first strap is stretched first when the airbag inflates and the second strap is stretched after when the first strap ruptures.

5. The airbag according to anyone of Claims 1 through 4, wherein the strap is partially narrowed.

6. The airbag according to anyone of Claims 1 through 5, having a vent hole and restricting means for restricting gas from discharging out of the vent hole; wherein
the restricting means comprises
a lid for covering the vent hole; and
a connecting member for connecting the lid with the strap; and
the airbag is arranged such that the vent hole is closed or narrowed when the airbag inflates because the strap and the connecting member prevent the lid from separating from the vent hole until when internal pressure of the airbag becomes predetermined pressure and such that the vent hole is opened or its opening is increased when the internal pressure of the airbag exceeds the predetermined pressure and the strap ruptures because the lid separates from the vent hole due to gas pressure within the airbag.

7. An airbag system having an airbag according to anyone of Claims 1 through 6 and an inflator for inflating the airbag.
